# EUROPEAN PATENT APPLICATION

(11) **EP 1 808 460 A2**
(43) Date of publication of application: **18.07.2007**
(21) Application number: 07000339.7
(22) Date of filing: 09.01.2007
(51) Int. Cl.: C08L 55/02, C08L 75/04, C08L 55/00, C08G 18/08

(54) **Impact resistant thermoplastic compound**

(30) Priority: 13.01.2006 IT VI20060013
(71) Applicant: SACME S.p.A., 36034 Molina di Malo VI (IT)
(72) Inventor: Miste', Carlo Dino, Valdagno (VI) (IT); Modesti, Michele, 35137 Padova (IT); Peserico, Antonio, Valdagno (VI) (IT)
(74) Representative: Vannini, Mario

(57) **Abstract**

An impact resistant thermoplastic compound, comprising an ABS matrix, a thermoplastic polyurethane (TPU) and a modifier, wherein the ABS is of the mass-polymerized type and the thermoplastic polyurethane (TPU) is of the polyester type. A process for preparing such compound.

## Description

### Field of the invention

This invention is directed to the field of polymer materials, and particularly relates to an impact resistant thermoplastic compound, as well as to the use and process of fabrication thereof.

The compound of this invention is particularly suitable for making articles of polymeric material, which are designed to withstand particularly violent impacts, such as helmets for skiing, motorcycling, cycling or the like.

### State of the Art

In recent times, polymeric materials of various natures are known to be used in many fields, where they are preferred to metal materials or the like, due to their low cost, light weight and versatility.

Particularly, in the fabrication of ski and motorcycle helmets, and generally in any field in which products are made which are designed to withstand violent impacts, ABS (acrylonitrile - butadiene - styrene copolymer) resins are widely used, thanks to their very low cost, relatively high impact resistance and easy processability, i.e. relatively low viscosity of the polymer. Also, depending on applications and uses, ABS is added with appropriate resins, additives, adjuvants or the like, for improving specific properties of interest.

Therefore, solutions have been developed for improving the physical and rheological properties of ABS.

EP-B-443432, EP-B-757078, DE-A-4022741 and DE-A-4113891 disclose thermoplastic compounds derived from the combination of ABS and thermoplastic polymers, particularly TPU (thermoplastic polyurethane).

One drawback of these prior art compounds is that they have a relatively low impact resistance, hardly meeting current design specifications for high-strength products, i.e. designed to absorb violent shocks, such as motorcycle and ski helmets.

Furthermore, these prior art compounds have very high manufacturing costs, as well as an excessive viscosity.

Therefore, a need has long been felt in the industry for an ABS compound having excellent impact resistance properties, as well as easy use and relatively low manufacturing costs.

### Summary of the invention

The object of this invention is to overcome the above drawbacks, by providing a thermoplastic compound that is highly efficient and relatively cost-effective.

A particular object is to provide a thermoplastic compound having a very high impact resistance.

A further object is to provide a thermoplastic compound that is easily processable.

Yet another object of the invention is to provide a process for preparing a thermoplastic compound that allows to optimize the yield.

These and other objects, as better explained hereafter, are fulfilled by a thermoplastic compound which, according to claim 1, comprises an ABS matrix, a thermoplastic polyurethane (TPU) an impact modifier, wherein said ABS is of the mass-polymerized type and the thermoplastic polyurethane (TPU) is of the polyester type.

Thanks to this particular configuration, the compound of the invention has a very high impact resistance, i.e. much higher than prior art ABS compounds.

Furthermore, the compound of the invention has a very low viscosity, wherefore it is easily processable. Another important feature is that all components employed have a low cost and are readily available, whereby to the compound of the invention is highly cost-effective.

In another aspect, the invention relates to an article of polymeric material according to claim 10, which is characterized in that it comprises the thermoplastic compound as described and claimed herein.

In yet another aspect, the invention relates to the use of the thermoplastic compound for making impact resistant articles, according to claim 11.

In a further aspect, the invention relates to a process for preparing a compound, according to claim 12, which comprises the steps of providing an ABS matrix, providing a thermoplastic polyurethane (TPU), blending said ABS matrix and said polyurethane (TPU) following addition of an impact modifier under controlled temperature conditions, wherein said ABS is of the mass-polymerized type and said thermoplastic polyurethane (TPU) is of the polyester type.

### Detailed description of a few preferred embodiments

Further features and advantages of the invention will be more apparent upon reading of the following detailed description of a few preferred, non-exclusive embodiments of the compound of the invention.

The impact resistant thermoplastic compound of this invention generally comprises an ABS matrix, a thermoplastic polyurethane (TPU) and an impact modifier.

The term "ABS matrix" as used herein is intended to define acrylonitrile-butadiene-styrene polymers, which are obtained by polymerization of butadiene rubber with acrylonitrile and styrene or an acrylonitrile/styrene copolymer in any ratio therebetween. Such polymerization is known to occur with the butadiene rubber in emulsion, in continuous mass or in suspension in the above mentioned polymers. Also, the "matrix" is known to be the prevailing component in the blend.

Furthermore, the term "TPU" is known to designate thermoplastic polyurethanes, i.e. chemical compounds obtained by polymerization of a polyol and a polyisocianate, in any ratio therebetween, which are characterized by the property of becoming plastic when heated. Polyurethanes are known to be of either the polyether or polyester type, depending on the nature of the polyol employed.

Also, the term "impact modifier" as used herein is intended as a compound that can improve resilience of a compound. In any case, the impact modifier consists of an elastomeric phase, which is incorporated in any manner in ABS and TPU phases.

Advantageously, the impact modifier may be selected from the group of butadiene and/or styrene elastomers, and is preferably MBS rubber.

The term "MBS rubber" shall be intended to designate methacrylate - butadiene - styrene copolymer resins.

Nevertheless, it is believed that any other impact modifier known to the skilled person may be used for the purpose, regardless of its nature, provided it is compatible with mass ABS and polyester TPU phases, without departure from the scope of the invention as defined in the annexed claims.

Conveniently, the ABS matrix may represent from 50 to 90 weight percent based on the total weight of the blend composed of the ABS matrix and the thermoplastic polyurethane (TPU), whereas the TPU thermoplastic polyurethane may represent from 10 to 50 weight percent based on the total weight of the blend composed of the ABS matrix and the TPU thermoplastic polyurethane. Preferably, the ABS will represent 70% and the TPU will represent 30%.

Also, the impact modifier may represent from 3 to 7 weight percent based on the total weight of the blend composed of the ABS matrix and the TPU thermoplastic polyurethane. Preferably, the modifier will represent 5%.

In a preferred non exclusive embodiment of the invention, the compound may further include a nanofiller, preferably of the montmorillonite type.

Nevertheless, it will be understood that any other type of nanofiller, regardless of its nature, may be used for the purpose without departure from the scope defined by the annexed claims.

Suitably, the nanofiller may represent from 3 to 5 percent based on the total weight of the blend composed of the ABS matrix and the TPU thermoplastic polyurethane.

The compound of the invention may include suitable binders and/or adjuvants and/or colorants and/or lubricants and/or antioxidants and/or the like, which make it suitable to a variety of purposes and/or uses.

The thermoplastic compound of the invention may be prepared using a process as disclosed and claimed hereinafter.

The preparation of the inventive compound starts with the provision of the mass polymerized ABS matrix and the polyester thermoplastic polyurethane (TPU). The ABS /TPU impact modifier may be also provided at this stage.

As used herein, the term "provision" and derivatives thereof, designates the preparation of a relevant component for a relevant process step, including any preventive treatment designed for optimal performance of such relevant step, from simple collection and possible storage to purification, addition of adjuvants or excipients, and thermal and/or chemical and/or physical pre-treatments or the like.

Then, the ABS matrix and the TPU polyurethane will be blended, following addition of the impact modifier under controlled temperature conditions. Advantageously, such blending will occur using an extruder, preferably of the corotating twin-screw type, having a speed of 350 rpm.

It will be understood that the impact modifier may be added to the ABS only, to the TPU only, or to the total or partial blend of the two components, in either melted or unmelted form, without departure from the scope of the invention as defined in the annexed claims. The addition of the impact modifier may further occur before reaching the extruder or during extrusion.

In a preferred, non exclusive embodiment of the invention, the ABS matrix may be heated to its melting point and be maintained at a first operating temperature T₁, which may suitably be of 200°C to 240°C, and preferably of about 220°C.

The impact modifier, preferably MBS rubber, may be dispersed in the melted ABS in amounts of 3 to 5% based on the total weight of the ABS + TPU blend, as mentioned above. The melted or unmelted impact modifier may be also added to ABS as it is, without departure from the scope of the invention as defined in the annexed claims.

The nanofiller, preferably of the montmorillonite type, may be also added at this stage, impact modifier, preferably MBS rubber, may be dispersed in the melted ABS in amounts of 3 to 5% based on the total weight of the ABS + TPU blend, as mentioned above. It will be understood that the nanofiller may be added at any other stage, without departure from the scope defined by the annexed claims.

Then, the compound will be blended by extrusion in an extruder, such as a screw extruder, for preparation thereof in view of the fabrication of high resistance products.

Preferably, after three screw segments, the thermoplastic polyurethane (TPU) can be added, at a second operating temperature T₂, advantageously of 180°C to 200°C, and preferably of about 190°C. The TPU may be added as it is or previously melted.

Once it is added, the TPU is blended with the other components through six
- seven screw segments, whereupon the finished compound will be extruded proper for forming the product.

While the preparation process includes extrusion, any other technique known per se and within reach of those of ordinary skill in the art may be used, such as stirring, without departure from the scope as defined in the annexed claims.

Now a preferred, non exclusive embodiment of the inventive compound will be described, although it will be understood that a variety of material compositions, amounts, operating temperatures, times and processing modes may be used depending on needs and on the raw materials employed.

The compound so prepared will exhibit excellent mechanical properties. Particularly, it will have an exceptionally high shock resistance. Without being bound to any theory, it is believed that such surprising shock-resistance properties derive from the synergic effect of the mass ABS, the polyester TPU and the impact modifier. Particularly, the affinity of the impact modifier with the ABS and the TPU is deemed to be important.

A few embodiments of polymer mixtures, having an ABS matrix added with TPU will be described hereinafter by way of indication and without limitation to the invention. Each sample has been tested to determine its melt flow index (MFI) (which is a measure of the viscosity, and hence the processability of the polymer), and its Izod impact strength under hot (23°C) and cold (-20°C) conditions.

Izod impact tests have been performed under the ASTM standard D 256 - 90B, "IZOD TEST", method "A", where, as is known, the specimen is held on a support and is struck by a pendulum which is dropped from a certain height and impacts the sample at the lowest point of its oscillation and rises to a lower height, due to the energy consumed in the deformation and rupture of the specimen.

The Melt Flow Index has been measured under the UNI-ISO standard 1133-94 for ABS which, as is known, is a measure of the amount of polymer exiting from a nozzle of known diameter, following heating thereof and application of a standardized weight thereto. According to the above standard, the melt has a temperature of 220°C and the weight applied is 10 Kg.

All samples have been obtained by extrusion and then injection molded using well-known methods. The same extrusion temperatures have been employed for all samples.

| | ABS type, % | TPU type, % | Impact modifier, % | Extruder | MFI | Izod Impact Strength 23° | Izod Impact Strength -20° |
|---|---|---|---|---|---|---|---|
| Control sample | | | | | 11 | 500 | 320 |
| Sample 1 | emuls., 80 | p.ester, 20 | - | twin screw | 40 | 535 | 230 |
| Sample 2 | emuls., 65 | p.ester, 35 | - | twin screw | 60 | 860 | 220 |
| Sample 3 | mass, 80 | p.ester, 20 | - | twin screw | 20 | 260 | 135 |
| Sample 4 | mass, 70 | p.ester, 30 | MBS, 5 | twin screw | 19 | 830 | 385 |
| Sample 5 | mass, 65 | p.ester, 35 | MBS, 5 | twin screw | 23 | 875 | 626 |
| Sample 6 | mass, 65 | p.ester, 35 | MBS, 5 | single screw | 27 | 780 | 500 |
| Sample 7 | mass, 60 | p.ester, 40 | MBS, 5 | twin screw | 30 | 955 | 618 |
| Sample 8 | emuls., 70 | p.ester, 30 | MBS, 5 | twin screw | 40 | 500 | |
| Sample 9 | mass, 70 | p.ether, 30 | MBS, 5 | twin screw | 15 | 115 | |
| Sample 10 | emuls., 70 | p.ester, 30 | MBS, 5 | single screw | 50 | 330 | 130 |

Unless otherwise stated, the MFI is intended to be expressed in grams extruded in 10 minutes and the Izod impact strength in Joule/meter.

Furthermore, unless otherwise stated, the tests have been performed using a corotating twin screw extruder having a speed of 350 rpm and a single screw extruder having a speed of 110 rpm.

The indication "Control sample" denotes the reference sample, i.e. ABS as it is, having a MFI of 11 and an Izod impact strength of about 500 J/m at 23°C and of 320 J/m at -20°C.

The indication "Sample 1" denotes a first thermoplastic compound sample comprising 80% by weight of an emulsion polymerized ABS and 20% by weight of polyester TPU, without impact modifier and processed using a twin screw extruder. The results in the table show that this sample has a very good MFI (40), an impact strength under hot conditions similar to ABS as it is (535 J/m) and an impact strength under cold conditions (230 J/m) lower than ABS as it is.

The indication "Sample 2" denotes a second thermoplastic compound sample comprising 65 % by weight of an emulsion polymerized ABS and 35 % by weight of polyester TPU, without impact modifier and processed using a twin screw extruder. The results in the table show that this sample has an exceptional MFI (65), an exceptional impact strength under hot conditions (860 J/m) and a low impact strength under cold conditions (220 J/m).

The indication "Sample 3" denotes a third thermoplastic compound sample comprising 80% by weight of a mass polymerized ABS and 20% by weight of polyester TPU, without impact modifier and processed using a twin screw extruder. The results in the table show that this sample has a good MFI (20), but a rather low impact strength both under hot conditions (260 J/m) and under cold conditions (135 J/m). Without being bound to any theory, it is believed that a compound comprising an ABS matrix and TPU with no impact modifier does not fall within the scope of this invention.

The indication "Sample 4" denotes a fourth thermoplastic compound sample comprising 70% by weight of a mass polymerized ABS, 30% by weight of polyester TPU, and 5% by weight of an MBS rubber impact modifier based on the total weight of ABS and TPU, the whole being processed using a twin screw extruder. The results in the table show that this sample has a good MFI (19), higher than ABS as it is, and exceptional impact strength both under hot conditions (830 J/m) and under cold conditions (385 J/m).

The indication "Sample 5" denotes a fifth thermoplastic compound sample comprising 65% by weight of a mass polymerized ABS, 35% by weight of polyester TPU, and 5% by weight of an MBS rubber impact modifier based on the total weight of ABS and TPU, the whole being processed using a twin screw extruder. The results in the table show that mechanical and rheological properties are even better than the previous sample, with a good MFI (23), and exceptional impact strength both under hot conditions (875 J/m) and under cold conditions (626 J/m).

The indication "Sample 6" denotes a sixth thermoplastic compound sample, similar to the previous one, but processed using a single screw extruder. The results in the table show that this sample also has exceptional mechanical properties, with a good MFI (27), and a very good impact strength both under hot conditions (780 J/m) and under cold conditions (500 J/m).

The indication "Sample 7" denotes a seventh thermoplastic compound sample comprising 60% by weight of a mass polymerized ABS, 40% by weight of polyester TPU, and 5% by weight of an MBS rubber impact modifier based on the total weight of ABS and TPU, the whole being processed using a twin screw extruder. The results in the table show once again excellent mechanical and rheological properties (MFI 23, impact strength both under hot conditions 875 J/m and under cold conditions 626 J/m).

The indication "Sample 8" denotes an eighth thermoplastic compound sample comprising emulsion polymerized ABS (70%), polyester TPU (30%), and MBS rubber impact modifier (5%), processed using a twin screw extruder. The results show a good processability index (MFI = 40) and the same Izod impact strength as ABS as it is. Therefore, it is believed that the presence of a mass polymerized ABS matrix in the blend is essential to obtain the compound of the invention.

The indication "Sample 9" denotes a ninth thermoplastic compound sample comprising mass polymerized ABS (70%), polyether TPU (30%), and MBS rubber impact modifier (5%), processed using a twin screw extruder. The results show that, while this sample has a good processability index (MFI = 15), it has an unacceptably low Izod impact strength. Therefore, it is believed that the presence of polyester TPU in the blend is essential to obtain the compound of the invention.

The indication "Sample 10" denotes a tenth and last thermoplastic compound sample comprising emulsion polymerized ABS (70%), polyester TPU (30%), and MBS rubber impact modifier (5%), processed using a single screw extruder. The results show that, while this sample has a very good processability index (MFI = 50), it has an unacceptably low Izod impact strength. This further confirms that the presence of a mass polymerized ABS matrix in the blend is essential to obtain the compound of the invention.

It is further believed that blend homogeneity of is also important, i.e. that the higher homogeneity, the better impact resistance is acheved in the final compound.

The above disclosure clearly shows that the invention fulfills the intended objects and particularly meets the requirement of providing a compound having exceptional impact resistance properties as well as a low cost.

The compound of the invention further exhibits an excellent processability.

The compound of this invention is susceptible of a number of changes and variants, within the inventive principle disclosed in the appended claims. All the details thereof may be replaced by other technically equivalent parts, and the materials may vary depending on different needs, without departure from the scope of the invention.

## Claims

1. A thermoplastic compound comprising:
- an ABS matrix;
- a thermoplastic polyurethane TPU;
- an impact modifier,
wherein said ABS is of the mass polymerized type and said thermoplastic polyurethane TPU is of the polyester type.

2. Compound as claimed in claim 1, **characterized in that** said impact modifier is selected from the group of butadiene and/or styrene elastomers.

3. Compound as claimed in claim 1, **characterized in that** said impact modifier is MBS rubber.

4. Compound as claimed in claim 1, **characterized in that** said ABS matrix is 50 to 90 weight percent based on the total weight of the ABS matrix and the thermoplastic polyurethane TPU, and preferably about 70%.

5. Compound as claimed in claim 1, **characterized in that** said thermoplastic polyurethane TPU is from 10 to 50 weight percent based on the total weight of the ABS matrix and the thermoplastic polyurethane (TPU), and preferably about 30 %.

6. Compound as claimed in claim 1, **characterized in that** said impact modifier represents is 3 to 7 weight percent based on the total weight of the ABS matrix and the thermoplastic polyurethane TPU, and preferably about 5 %.

7. Compound as claimed in claim 1, **characterized in that** it further comprises a nanofiller.

8. Compound as claimed in claim 9, **characterized in that** said nanofiller is of the montmorillonite type.

9. Compound as claimed in claim 9, **characterized in that** said nanofiller is 3 to 7 weight percent based on the total weight of the ABS matrix and the thermoplastic polyurethane TPU.

10. An article made of impact resistant polymeric material, **characterized in that** the polymeric material comprises a thermoplastic compound as claimed in one or more of the preceding claims.

11. The use of the thermoplastic compound as claimed in one or more of the preceding claims for making impact resistant articles.

12. A process for preparing an impact resistant thermoplastic compound as claimed in one or more of the preceding claims, comprising the steps of:
- providing an ABS matrix;
- providing a thermoplastic polyurethane TPU;
- blending said ABS matrix and said TPU polyurethane, with the addition of an impact modifier under controlled temperature conditions,
wherein said ABS is of the mass polymerized type and said thermoplastic polyurethane TPU is of the polyester type.

13. Process as claimed in claim 15, **characterized in** said ABS matrix is heated to its melting point, to a first operating temperature (T₁).

14. Process as claimed in claim 16, **characterized in that** said first operating temperature (T₁) is of 200°C to 240°C, and is preferably of about 220°C.

15. Process as claimed in claim 15, **characterized in that** said thermoplastic polyurethane TPU is added at a second operating temperature (T₂).

16. Process as claimed in claim 18, **characterized in that** said second operating temperature (T₂) is of 180°C to 200°C, and is preferably of about 190°C.

17. Process as claimed in claim 20, **characterized in that** said impact modifier is dispersed in said ABS matrix, which is added with said thermoplastic polyurethane TPU.

18. Process as claimed in claim 15, **characterized in that** it comprises a step in which a nanofiller is added.

19. Process as claimed in claim 22, **characterized in that** said nanofiller is added to said ABS matrix.

20. Process as claimed in claim 22, **characterized in that** said nanofiller is added to said ABS matrix which is added with said impact modifier.

21. Process as claimed in any one of the preceding claims, wherein the compound is blended by extrusion.

22. Process as claimed in claim 25, wherein said extrusion is carried out using a corotating twin screw extruder.

23. Process as claimed in any one of the preceding claims, wherein the addition of said thermoplastic polymer TPU occurs when said ABS matrix has been fed through three screw segments.

24. process as claimed in any one of the preceding claims, wherein extrusion of the compound, possibly added with nanofillers, occurs when it has been fed through seven screw segments.
